# EUROPEAN PATENT APPLICATION

(11) **EP 2 660 269 A1**
(43) Date of publication of application: **06.11.2013**
(21) Application number: 11854006.1
(22) Date of filing: 24.10.2011
(51) Int. Cl.: C08G 73/00, C08L 79/00

(54) **THERMOSETTING RESIN COMPOSITION**

(30) Priority: 27.12.2010 JP 2010289246
(71) Applicant: Mitsubishi Gas Chemical Company, Inc., Tokyo 100-8324 (JP)
(72) Inventor: ISOZAKI, Tsuyoshi, Tokyo 125-8601 (JP)
(74) Representative: HOFFMANN EITLE
(86) International application number: PCT/JP2011/074381
(87) International publication number: WO 2012/090578

(57) **Abstract**

There is provided a thermosetting resin composition having excellent flowability, low temperature moldability, curability, and heat resistance after curing or the like in the absence of a solvent. The thermosetting resin composition of the present invention contains, as essential components, a maleimide compound (A), a compound (B) having two or more polymerizable unsaturated hydrocarbon groups in its molecule, and a cyanate ester compound (C).

## Description

### Technical Field

The present invention relates to a thermosetting resin composition capable of being suitably used as a matrix resin for a fiber-reinforced composite material.

### Background Art

Conventionally, a fiber-reinforced composite material has been widely used in applications such as an aviation material, a machine tool material, and electrical and electronic materials. An epoxy resin (epoxy resin composition) has been known as a matrix resin used in this kind of fiber-reinforced composite material. However, recently, an operating temperature range required for the fiber-reinforced composite material is more than 200°C. Because the strength of the resin is immediately decreased by the deterioration of the resin under high temperature of 200°C or more, the epoxy resin composition cannot respond to the request. Therefore, the development of a novel matrix resin for a fiber-reinforced composite material alternative to the epoxy resin has been required.

On the other hand, as a matrix resin for a fiber-reinforced composite resin material capable of being used even under such a high-temperature condition, a polyimide resin, a resin obtained by modification a maleimide resin by an aromatic diamine, and a resin obtained by modification of a maleimide resin by an allyl compound, or the like have been known (see, for example, Patent Literatures 1 and 2).

### Citation List

### Patent Literature

Patent Literature 1: Japanese Patent Laid-Open No. 2003-105083
Patent Literature 2: Japanese Patent Laid-Open No. 2009-263624

### Summary of Invention

### Technical Problem

However, the polyimide resin has difficulty in moldability at 200°C or less. Because the resin composition obtained by modification of a maleimide resin by an aromatic diamine is a solid, the resin composition has insufficient flowability in the absence of a solvent, and cannot be used as the matrix resin for the fiber-reinforced composite material. Furthermore, post-curing at high temperature for a long time is required for completely curing the resin composition obtained by modification of a maleimide resin by an allyl compound, after molding. Therefore, these resins have poor process tolerance at the time of manufacturing. The resins have drawbacks of remarkably low handleability and manufacturing efficiency (productivity and economical efficiency).

In view of the situation, it is an object of the present invention to provide a thermosetting resin composition having excellent flowability in the absence of the solvent, capable of being molding-processed even at relatively low temperature, and having excellent curability and heat resistance after curing.

### Solution to Problem

The present inventors have diligently studied. As a result, the inventors found that a thermosetting resin composition having a specific blending composition can be molding-processed at relatively low temperature even in the absence of a solvent and has excellent curability, and a cured product having relatively high heat resistance is obtained even in short-time post-curing treatment using the thermosetting resin composition. The present invention has been attained.

That is, the present invention provides the following items <1> to <10>.
<1> A thermosetting resin composition containing, as essential components, a maleimide compound (A), a compound (B) having two or more polymerizable unsaturated hydrocarbon groups in its molecule, and a cyanate ester compound (C).

<2> The thermosetting resin composition according to the item <1>, wherein content rates of the maleimide compound (A), the compound (B), and the cyanate ester compound (C) to a total amount of the compounds (A), (B), and (C) satisfy the following relationships:

| | |
|---|---|
| the maleimide compound (A) | 30 to 70% by mass; |
| the compound (B) | 5 to 30% by mass; and |
| the cyanate ester compound (C) | 20 to 45% by mass. |

<3> The thermosetting resin composition according to the item <1> or <2>, wherein the thermosetting resin composition has a viscosity at 80°C of 90 to 700 mPa·s measured using a B-type viscometer.

<4> The thermosetting resin composition according to any one of the items <1> to <3>, wherein the compound (B) has, in its molecule, two or more polymerizable unsaturated hydrocarbon groups selected from the group consisting of an acrylic group, a methacrylic group, a vinyl group, an allyl group, and an isopropenyl group.

<5> The thermosetting resin composition according to any one of the items <1> to <4>, wherein the maleimide compound (A) is one or more selected from the group consisting of 4,4'-diphenylmethane bismaleimide, polyphenylmethane maleimide, 1,6-bismaleimide-(2,2,4-trimethyl)hexane, and bisphenol A diphenyl ether bismaleimide.

<6> The thermosetting resin composition according to any one of the items <1> to <5>, wherein a melting point of the maleimide compound (A) is 205°C or less.

<7> The thermosetting resin composition according to any one of the items <1> to <6>, wherein the compound (B) is 1,3-diisopropenylbenzene or trimethylolpropane tri(meth)acrylate.

<8> The thermosetting resin composition according to any one of the items <1> to <7>, wherein the cyanate ester compound (C) has two or more aromatic rings in its molecule, and has a viscosity at 100°C of 100 mPa·s or less.

<9> The thermosetting resin composition according to any one of the items <1> to <8>, further containing a polymerization accelerator (D),
wherein a content of the polymerization accelerator (D) is 0.01 to 5 parts by mass based on the total 100 parts by mass of the maleimide compound (A), the compound (B), and the cyanate ester compound (C).

<10> The solvent-free thermosetting resin composition according to any one of the items <1> to <9>, wherein the thermosetting resin composition is substantially free of a solvent.

### Advantageous Effect of Invention

Because the thermosetting resin composition of the present invention can be molding-processed at relatively low temperature even in the absence of a solvent, the thermosetting resin composition for the fiber-reinforced composite material is easily manufactured. Because the thermosetting resin composition has excellent curability and heat resistance after curing, the cured product (thermosetting resin molded article) having relatively high heat resistance and strength is obtained even in short-time post-curing treatment. As a result, the fiber-reinforced composite material having excellent heat resistance and strength can be provided. Therefore, the fiber-reinforced composite resin material having improved process tolerance at the time of manufacturing, and accordingly not only excellent heat resistance and strength but also improved handleability and manufacturing efficiency (productivity and economical efficiency) can be realized by using the thermosetting resin composition of the present invention.

### Description of Embodiment

Hereinafter, an embodiment of the present invention will be described. The following embodiment is exemplified to describe the present invention, and the present invention is not limited only to the embodiment.

A thermosetting resin composition of the embodiment contains, as essential components, a maleimide compound (A), a compound (B) having two or more polymerizable unsaturated hydrocarbon groups in its molecule, and a cyanate ester compound (C).
Hereinafter, the compound (A), the compound (B), the compound (C), and other optional components will be described in detail.

The maleimide compound (A) used in the embodiment is a compound having a plurality of N-malermide groups in its molecule (preferably at a molecular end or in a side chain) (a so-called polyfunctional maleimide compound). Specific examples of the maleimide compound (A) include, but are not particularly limited to, those having a plurality ofN-maleimide groups in a polymer side chain such as polyphenylmethane maleimide, those having a plurality ofN-maleimide groups at a molecular end, such as 4,4'-diphenylmethane bismaleimide, bisphenol A diphenyl ether bismaleimide, m-phenylene bismaleimide, 3,3'-dimethyl-5,5'-diethyl-4,4'-diphenylmethane bismaleimide, and 4-methyl-1,3-phenylene bismaleimide, and those having a plurality ofN-maleimide groups at an end of aliphatic alkylene, such as 1,6-bismaleimide-(2,2,4-trimethyl)hexane. The maleimide compound (A) can be used either alone or in combination of two or more kinds thereof. From the viewpoint of the flowability, curability, or economical efficiency or the like of the obtained thermosetting resin composition, the maleimide compound (A) is preferably 4,4'-diphenylmethane bismaleimide, polyphenylmethane maleimide, 1,6-bismaleimide-(2,2,4-trimethyl)hexane, and bisphenol A diphenyl ether bismaleimide. Of these, polyphenylmethane maleimide, 4,4'-diphenylmethane bismaleimide, and 1,6-bismaleimide-(2,2,4-trimethyl)hexane are more preferable.

Here, from the viewpoint of suppressing precipitation when the thermosetting resin composition is prepared or stored to further improve handleability, the maleimide compound (A) preferably has a melting point of 205°C or less. Although the lower limit of the melting point of the maleimide compound (A) is not particularly limited, the melting point is preferably 60°C or more in light of the handleability. Examples of such a maleimide compound (A) include, but are not particularly limited to, polyphenylmethane maleimide (melting point: 75 to 145°C), 1,6-bismaleimide-(2,2,4-trimethyl)hexane (melting point: 73 to 110°C), 4,4'-diphenylmethane bismaleimide (melting point: 147 to 168°C), and m-phenylene bismaleimide (melting point: 194 to 204°C).

The content of the maleimide compound (A) in the thermosetting resin composition can be suitably set according to the kind of a compound to be used, and is not particularly limited. From the viewpoints of the flowability of the thermosetting resin composition and the heat resistance of a cured product obtained by curing the thermosetting resin composition, the content rate of the maleimide compound (A) with respect to the total amount of the compounds (A) to (C) is preferably 30 to 70% by mass, and more preferably 35 to 60% by mass. The content rate of the maleimide compound (A) with respect to the total amount of the compounds (A) to (C) is set to 30 to 70% by mass, and thereby a thermosetting resin composition having a viscosity enabling low temperature moldability is likely to be obtained, and a cured product having high heat resistance tends to be likely to be obtained.

The compound (B) used in the embodiment and having two or more polymerizable unsaturated hydrocarbon groups in its molecule functions as a so-called cross-linking agent. An optional polymerizable unsaturated hydrocarbon group can be used as the polymerizable unsaturated hydrocarbon group of the compound (B), and the kind and combination thereof are not particularly limited. Preferred examples of the polymerizable unsaturated hydrocarbon group include an acrylic group, a methacrylic group, a vinyl group, an allyl group, and an isopropenyl group. Although the number of the polymerizable unsaturated hydrocarbon groups contained in the molecule of the compound (B) is not particularly limited as long as the number is 2 or more, the number is preferably 2 to 6, and more preferably 2 to 4. Although the molecular weight of the compound (B) is not particularly limited, the molecular weight is preferably 80 to 2000, and more preferably 100 to 1000. Specific examples of the compound (B) include, but are not particularly limited to, aliphatic cross-linking agents such as allyl acrylate, allyl methacrylate, triallyl isocyanurate, and trimethylolpropane trimethacrylate, and aromatic cross-linking agents such as 1,3-propenyl benzene. The compound (B) can be used either alone or in combination of two or more kinds thereof. From the viewpoint of the curability of the obtained thermosetting resin composition or the heat resistance of the cured product, the compound (B) is preferably trimethylolpropane trimethacrylate and 1,3-diisopropenylbenzene.

The content of the compound (B) in the thermosetting resin composition can be suitably set according to the kind of a compound to be used, and is not particularly limited. From the viewpoints of the flowability of the thermosetting resin composition and the heat resistance of the cured product obtained by curing the thermosetting resin composition, the content rate of the compound (B) with respect to the total amount of the compounds (A) to (C) is preferably 5 to 30% by mass, and more preferably 7 to 25% by mass. The content rate of the compound (B) with respect to the total amount of the compounds (A) to (C) is set to 5 to 45% by mass, and thereby a thermosetting resin composition having a viscosity enabling low temperature moldability is likely to be obtained, and a cured product having high heat resistance tends to be likely to be obtained.

The cyanate ester compound (C) used in the embodiment is a compound represented by the general formula R-O-CN (in this formula, R is an organic group). Examples of the type of the cyanate ester compound (C) include those obtained by introducing a plurality of cyanates into bisphenols, and those obtained by introducing a plurality of cyanates into phenol novolacs. Specific examples thereof include, but are not particularly limited to, a phenol novolac polycyanate ester, a bisphenol A dicyanate ester, a bisphenol E dicyanate ester, a tetramethyl bisphenol F dicyanate ester, a bisphenol F dicyanate ester, and a dicyclopentadiene bisphenol A dicyanate ester. The cyanate ester compound (C) can be used either alone or in combination of two or more kinds thereof. From the viewpoint of the flowability of the obtained thermosetting resin composition, the cyanate ester compound (C) preferably has a viscosity at 100°C of 100 mPa·s or less. Examples thereof preferably include the phenol novolac polycyanate ester, the bisphenol A dicyanate ester, and the bisphenol E dicyanate ester.

Herein, from the viewpoint of adjusting the viscosity of the thermosetting resin composition in a preferred range or adjusting Tg or hardness of the cured product obtained by curing the thermosetting resin composition in a preferred range, the cyanate equivalent of the cyanate ester compound (C) is preferably 125 to 305 eq./g. Examples of such a cyanate ester compound (C) include, but are not particularly limited to, the phenol novolac polycyanate ester (cyanate equivalent: 127 eq./g), the bisphenol A dicyanate ester (cyanate equivalent: 139 eq./g), the bisphenol E dicyanate ester (cyanate equivalent: 132 eq./g), the tetramethyl bisphenol F dicyanate ester (cyanate equivalent: 153 eq./g), the bisphenol F dicyanate ester (cyanate equivalent: 125 eq./g), and the dicyclopentadiene bisphenol A dicyanate ester (cyanate equivalent: 303 eq./g).

The content of the cyanate ester compound (C) in the thermosetting resin composition can be suitably set according to the kind of a compound to be used, and is not particularly limited. From the viewpoints of the flowability and curability of the thermosetting resin composition, and the heat resistance of the cured product obtained by curing the thermosetting resin composition, the content rate of the cyanate ester compound (C) is preferably 20 to 50% by mass based on the total amount of the compounds (A) to (C), and more preferably 22 to 45% by mass. The content rate of the cyanate ester compound (C) based on the total amount of the compounds (A) to (C) is set to 20 to 50% by mass, and thereby a thermosetting resin composition having a viscosity and a curing speed which enable low temperature moldability is likely to be obtained, and a cured product having high heat resistance tends to be likely to be obtained.

The thermosetting resin composition of the embodiment may contain components other than the compounds (A) to (C), if necessary. Examples of such optional components include polymerization accelerators (D) such as an imidazole polymerization accelerator, an organic peroxide-based polymerization accelerator, and a radical polymerization accelerator. Specific examples of the polymerization accelerator (D) include, but are not particularly limited to, imidazole, 1-methyl imidazole, 2-methyl imidazole, 2-phenyl imidazole, 2-ethyl imidazole, 2-butyl imidazole, 1,2-dimethyl imidazole, 2-ethyl-4-methyl imidazole, 2,4,5-triphenyl imidazole, dibenzoyl peroxide, t-butyl hydroperoxide, di-t-butyl peroxide, cumene hydroperoxide, diisopropylbenzene hydroperoxide, and azoisobutyronitrile. The polymerization accelerator (D) can be used either alone or in combination of two or more kinds thereof. From the viewpoint of the curability of the obtained thermosetting resin, the polymerization accelerator (D) is preferably the imidazole polymerization accelerator.

The content of the polymerization accelerator (D) in the thermosetting resin composition can be suitably set according to the kind of a polymerization accelerator to be used, and is not particularly limited. From the viewpoint from achieving both a polymerization promotion effect and the heat resistance of the cured product, the content rate of the polymerization accelerator (D) is preferably 0.01 to 5 parts by mass based on 100 parts by mass of the thermosetting resin composition containing the compounds (A), (B), and (C), more preferably 0.05 to 4 parts by weight, and still more preferably 0.1 to 3 parts by weight.

A known technique can be suitably applied to a method for preparing the thermosetting resin composition of the embodiment, and the method for preparing the thermosetting resin composition of the embodiment is not particularly limited. Preferred examples of the preparing method include the following method. In the preparing method, first, the maleimide compound (A) and the cyanate ester compound (C) are melted and mixed at 120 to 160°C for 30 minutes to 6 hours. After the temperature of the obtained melt mixture is then lowered to 100°C or less, the compound (B) is added to the mixture. If necessary, the polymerization accelerator (D) is added to the mixture. The mixture is homogeneously melted and mixed to prepare the thermosetting resin composition.

The thermosetting resin composition of the embodiment is cured to obtain the cured product (thermosetting resin molded article). A method for curing the thermosetting resin composition is not particularly limited. For example, the thermosetting resin composition is heated to 80°C, and is cast between two mold release-processed glass plates using a spacer having a thickness of 1.5 mm. The thermosetting resin composition is primarily cured at 180°C for 2 hours, and the primarily cured product is then removed from the glass plates. The primarily cured product is post-cured at 240°C for 2 hours, and thereby the cured product (thermosetting resin molded article) can be obtained.

The thermosetting resin composition of the embodiment can be applied to various applications, and the application is not particularly limited. Above all, because the thermosetting resin composition of the embodiment has excellent heat resistance, strength, handleability, and manufacturing efficiency, the thermosetting resin composition is particularly useful in applications requiring such performances, for example, in fields such as a matrix resin for a fiber-reinforced composite material and a sealant for electrical and electronic parts. The thermosetting resin composition is particularly suitable as the matrix resin for the fiber-reinforced composite material. Because the thermosetting resin composition of the embodiment has excellent flowability, the thermosetting resin composition is particularly useful in use in the absence of a solvent, i.e., in the aspect of a solvent-noncontaining (solventless) thermosetting resin composition. Herein, "the absence of the solvent" or "the solventless" (solvent-noncontaining) means "substantially free of a solvent", and "substantially free of a solvent" is a concept permitting inclusion of an extremely small amount of solvent. The extremely small amount is less than 1% by mass based on the total amount of the thermosetting resin composition, preferably less than 0.1% by mass, and more preferably 0.01% by mass. The thermosetting resin composition of the embodiment can be suitably used also in an aspect of using the thermosetting resin composition in a state where it is dissolved in the solvent, for example, an organic solvent.

From the viewpoints of handleability and molding processibility, the viscosity of the thermosetting resin composition of the embodiment at 80°C measured using a B-type viscometer is preferably 90 to 700 (mPa·s), and more preferably 100 to 650 (mPa·s). The viscosity of the thermosetting resin composition at 80°C is in the range of 90 to 700 (mPa·s), and thereby the thermosetting resin composition becomes a liquid having flowability under a use condition of 80°C or more. The thermosetting resin composition can be molding-processed at relatively low temperature even in the absence of the solvent, and the handleability of the thermosetting resin composition at the time of manufacturing tends to be improved.

From the viewpoints of the handleability and the molding processibility, the glass transition temperature (Tg) of the thermosetting resin composition of the embodiment measured by a DMA method based on JIS C6481 is preferably 200 to 350°C, and more preferably 250 to 330°C. The Tg of the thermosetting resin composition is in the range of 200 to 350°C, and thereby the curability and the heat resistance after curing tend to be improved.

### Examples

Hereinafter, the present invention will be described in detail with reference to Examples and Comparative Examples. However, the present invention is not limited to examples in any way. Hereinafter, unless otherwise noted, "part" represents "part by mass".

### (Example 1)

35 parts of a bisphenol A dicyanate ester (Primaset (R) BADCy manufactured by Lonza Company, cyanate equivalent: 139 eq./g) and 65 parts of polyphenylmethane maleimide (BMI-2300 manufactured by Daiwa Fine Chemicals Co., Ltd., a melting point: 75 to 145°C) were charged to a vessel equipped with a stirrer, and then melted and mixed at 150°C for 4 hours. After the temperature of the melt was lowered to 80°C, 10 parts oftrimethylolpropane trimethacrylate (NK ester TMPT manufactured by Shin-Nakamura Chemical Co., Ltd.) and 2.5 g of 2-ethyl-4-methyl imidazole were added into the vessel, and further mixed for 30 minutes to obtain a thermosetting resin composition of Example 1. The thermosetting resin composition of Example 1 thus obtained had a viscosity at 80°C of 438 mPa·s, and a fiber base material could be solventless-impregnated with the thermosetting resin composition.
Then, the thermosetting resin composition of Example 1 was cast between two mold release-processed glass plates which were disposed opposite to each other in a state where a spacer having a thickness of 1.5 mm was sandwiched between the glass plates. Heat treatment (primary curing treatment) was then performed at 180°C for 2 hours to obtain a resin plate (primarily cured product) of Example 1 having a thickness of 1.5 mm. Then, the resin plate of Example 1 was removed from the glass plates, and heat treatment (post-curing) was further performed at 240°C for 2 hours to obtain a cured product (secondarily cured product) of Example 1.

### (Example 2)

40 parts of a phenol novolac polycyanate ester (Primaset (R) PT-15 manufactured by Lonza Company, cyanate equivalent: 127 eq./g), 50 parts of polyphenylmethane maleimide (BMI-2300 manufactured by Daiwa Fine Chemicals Co., Ltd., a melting point: 75 to 145°C), and 10 parts of 4,4'-diphenylmethane bismaleimide (BMI-1000 manufactured by Daiwa Fine Chemicals Co., Ltd., a melting point: 147 to 168°C) were charged to a vessel equipped with a stirrer, and then melted and mixed at 150°C for 3 hours. After the temperature of the melt was lowered to 80°C, 15 parts of 1,3-diisopropenylbenzene (a reagent manufactured by Tokyo Chemical Industry Co., Ltd.) and 1 g of di-t-butyl-peroxide were added into the vessel, and further mixed for 30 minutes to obtain a thermosetting resin composition of Example 2. The thermosetting resin composition of Example 2 thus obtained had a viscosity at 80°C of 625 mPa·s, and a fiber base material could be solventless-impregnated with the thermosetting resin composition.
Then, a resin plate (primarily cured product) of Example 2 and a cured product (secondarily cured product) of Example 2 were obtained in the same manner as in Example 1 except that the thermosetting resin composition of Example 2 was used.

### (Example 3)

45 parts of a bisphenol A dicyanate ester (Primaset (R) BADCy manufactured by Lonza Company, cyanate equivalent: 139 eq./g), 30 parts of 1,6-bismaleimide-(2,2,4-trimethyl)hexane (BMI-TMH manufactured by Daiwa Fine Chemicals Co., Ltd., a melting point: 73 to 110°C), and 25 parts of 4,4'-diphenylmethane bismaleimide (BMI-1000 manufactured by Daiwa Fine Chemicals Co., Ltd., a melting point: 147 to 168°C) were charged to a vessel equipped with a stirrer, and then melted and mixed at 150°C for 6 hours. After the temperature of the melt was lowered to 80°C, 10 parts of trimethylolpropane trimethacrylate (NK ester TMPT manufactured by Shin-Nakamura Chemical Co., Ltd.) and 3 g of 2-ethyl-4-methyl imidazole were added into the vessel, and further mixed for 30 minutes to obtain a thermosetting resin composition of Example 3. The thermosetting resin composition of Example 3 thus obtained had a viscosity at 80°C of 380 mPa·s, and a fiber base material could be solventless-impregnated with the thermosetting resin composition.
Then, a resin plate (primarily cured product) of Example 3 and a cured product (secondarily cured product) of Example 3 were obtained in the same manner as in Example 1 except that the thermosetting resin composition of Example 3 was used.

### (Example 4)

28 parts of a bisphenol A dicyanate ester (Primaset (R) BADCy manufactured by Lonza Company, cyanate equivalent: 139 eq./g), and 47 parts of polyphenylmethane maleimide (BMI-2300 manufactured by Daiwa Fine Chemicals Co., Ltd., a melting point: 75 to 145°C) were charged to a vessel equipped with a stirrer, and then melted and mixed at 150°C for 6 hours. After the temperature of the melt was lowered to 80°C, 20 parts oftrimethylolpropane trimethacrylate (NK ester TMPT manufactured by Shin-Nakamura Chemical Co., Ltd.) and 3 g of 2-ethyl-4-methyl imidazole were added into the vessel, and further mixed for 30 minutes to obtain a thermosetting resin composition of Example 4. The thermosetting resin composition of Example 4 thus obtained had a viscosity at 80°C of 393 mPa·s, and a fiber base material could be solventless-impregnated with the thermosetting resin composition.
Then, a resin plate (primarily cured product) of Example 4 and a cured product (secondarily cured product) of Example 4 were obtained in the same manner as in Example 1 except that the thermosetting resin composition of Example 4 was used.

### (Example 5)

24 parts of a bisphenol A dicyanate ester (Primaset (R) BADCy manufactured by Lonza Company, cyanate equivalent: 139 eq./g), and 36 parts of polyphenylmethane maleimide (BMI-2300 manufactured by Daiwa Fine Chemicals Co., Ltd., a melting point: 75 to 145°C) were charged to a vessel equipped with a stirrer, and then melted and mixed at 150°C for 6 hours. After the temperature of the melt was lowered to 80°C, 40 parts of trimethylolpropane trimethacrylate (NK ester TMPT manufactured by Shin-Nakamura Chemical Co., Ltd.) and 2 g of 2-ethyl-4-methyl imidazole were added into the vessel, and further mixed for 30 minutes to obtain a thermosetting resin composition of Example 5. The thermosetting resin composition of Example 5 thus obtained had a viscosity at 80°C of 122 mPa·s, and a fiber base material could not be solventless-impregnated with the thermosetting resin composition.
Then, a resin plate (primarily cured product) of Example 5 and a cured product (secondarily cured product) of Example 5 were obtained in the same manner as in Example 1 except that the thermosetting resin composition of Example 5 was used.

### (Comparative Example 1)

70 parts of a bisphenol A dicyanate ester (Primaset (R) BADCy manufactured by Lonza Company, cyanate equivalent: 139 eq./g) was charged to a vessel equipped with a stirrer, and then melted and mixed at 150°C for 6 hours. After the temperature of the melt was lowered to 80°C, 30 parts of trimethylolpropane trimethacrylate (NK ester TMPT manufactured by Shin-Nakamura Chemical Co., Ltd.) and 1 g of di-t-butyl peroxide were added into the vessel, and further mixed for 30 minutes to obtain a thermosetting resin composition of Comparative Example 1. The thermosetting resin composition of Comparative Example 1 thus obtained had a viscosity at 80°C of 87 mPa·s, and a fiber base material could not be solventless-impregnated with the thermosetting resin composition.
Then, the thermosetting resin composition of Comparative Example 1 was cast between two mold release-processed glass plates which were disposed opposite to each other in a state where a spacer having a thickness of 1.5 mm was sandwiched between the glass plates. Heat treatment (primary curing treatment) was then performed at 280°C for 2 hours. However, the thermosetting resin composition of Comparative Example 1 was not cured by the curing of the primary curing treatment. The thermosetting resin composition was not cured by heat treatment at 200°C for 2 hours, and could not be molded.

### (Comparative Example 2)

40 parts of a phenol novolac polycyanate ester (Primaset (R) PT-15 manufactured by Lonza Company, cyanate equivalent: 127 eq./g), 40 parts of polyphenylmethane maleimide (BMI-2300 manufactured by Daiwa Fine Chemicals Co., Ltd., a melting point: 75 to 145°C), and 20 parts of 4,4'-diphenylmethane bismaleimide (BMI-1000 manufactured by Daiwa Fine Chemicals Co., Ltd., a melting point: 147 to 168°C) were charged to a vessel equipped with a stirrer, and then melted and mixed at 150°C for 2 hours. After the temperature of the melt was lowered to 80°C, 1 g of 2-ethyl-4-methyl imidazole was added into the vessel, and further mixed for 30 minutes to obtain a thermosetting resin composition of Comparative Example 2. The thermosetting resin composition of Comparative Example 3 thus obtained had a viscosity at 80°C of 754 mPa·s, and a fiber base material could be solventless-impregnated with the thermosetting resin composition.
Then, the thermosetting resin composition of Comparative Example 2 was cast between two mold release-processed glass plates which were disposed opposite to each other in a state where a spacer having a thickness of 1.5 mm was sandwiched between the glass plates. Heat treatment (primary curing treatment) was then performed at 200°C for 2 hours. However, the thermosetting resin composition of Comparative Example 2 generated a gelated substance during the primary curing treatment. The thermosetting resin composition could not be molded.

### (Comparative Example 3)

When 70 parts ofpolyphenylmethane maleimide (BMI-2300 manufactured by Daiwa Fine Chemicals Co., Ltd., a melting point: 75 to 145°C) and 30 parts of 1,3-diisopropenylbenzene (a reagent manufactured by Tokyo Chemical Industry Co., Ltd.) were charged to a vessel equipped with a stirrer, and then intended to be stirred at 150°C, the polymerization started at 120°C, which disabled stirring.

### (Comparative Example 4)

72 parts of a bisphenol A dicyanate ester (Primaset (R) BADCy manufactured by Lonza Company, cyanate equivalent: 139 eq./g), and 8 parts of 4,4'-diphenylmethane bismaleimide (BMI-1000 manufactured by Daiwa Fine Chemicals Co., Ltd., a melting point: 147 to 168°C) were charged to a vessel equipped with a stirrer, and then melted and mixed at 150°C for 6 hours. After the temperature of the melt was lowered to 80°C, 20 parts of a bisphenol A-based liquefied epoxy resin (EPICLON 850-S manufactured by DIC) was added into the vessel, and further mixed for 30 minutes to obtain a thermosetting resin composition of Comparative Example 4. The thermosetting resin composition of Comparative Example 4 thus obtained had a viscosity at 80°C of 670 mPa·s, and a fiber base material could be solventless-impregnated with the thermosetting resin composition.
Then, a resin plate (primarily cured product) of Comparative Example 4 and a cured product (secondarily cured product) of Comparative Example 4 were obtained in the same manner as in Example 1 except that the thermosetting resin composition of Comparative Example 4 was used.

### (Comparative Example 5)

70 parts of diallyl bisphenol A (BPA-CA manufactured by Konishi Chemical Industry Co., Ltd.), 15 parts of 1,6-bismaleimide-(2,2,4-trimethyl)hexane (BMI-TMH manufactured by Daiwa Fine Chemicals Co., Ltd., a melting point: 73 to 110°C), 60 parts of 4,4'-diphenylmethane bismaleimide (BMI-1000 manufactured by Daiwa Fine Chemicals Co., Ltd., a melting point: 147 to 168°C), and 25 parts of m-phenylene bismaleimide (BMI-3000 manufactured by Daiwa Fine Chemicals Co., Ltd., a melting point: 194 to 204°C) were charged to a vessel equipped with a stirrer, and then mixed until a homogeneous solution was produced at 120°C. After the temperature of the mixture liquid was lowered to 80°C, 5.1 g of 2-ethyl-4-methyl imidazole was added into the vessel, and further mixed for 10 minutes to obtain a thermosetting resin composition of Comparative Example 5. The thermosetting resin composition of Comparative Example 5 thus obtained had a viscosity at 80°C of 415 mPa·s, and a fiber base material could be solventless-impregnated with the thermosetting resin composition.
Then, a resin plate (primarily cured product) of Comparative Example 5 and a cured product (secondarily cured product) of Comparative Example 5 were obtained in the same manner as in Example 1 except that the thermosetting resin composition of Comparative Example 5 was used.

The details of test methods performed in Examples and Comparative Examples are as follows.

### [Viscosity of Thermosetting Resin Composition]

The viscosity was measured using a B-type viscometer in a constant temperature water bath controlled to 80°C.

### [Glass Transition Temperature (Tg) of Thermosetting Resin Composition]

The glass transition temperature was measured by a DMA method based on JIS C6481.

### [Bending Strength of Cured Product]

Three-point bending strengths were measured on the following conditions (1) and (2) based on JIS K 6911.
(1) The bending strengths at 25°C and 150°C were measured using the cured products (the secondarily cured products after post-curing) of Examples and Comparative Examples as samples.
(2) The bending strengths at 25°C were measured using the cured products (the secondarily cured products after post-curing) of Examples and Comparative Examples left for 200 hours in an oven controlled to 250°C as samples.

Evaluation results are shown in Tables 1 and 2.

**[Table 1]**

| | Example 1 | Example 2 | Example 3 | Example 4 | Example 5 |
|---|---|---|---|---|---|
| viscosity of resin composition (mPa·s) | 438 | 625 | 380 | 393 | 122 |
| Tg (°C) | 317.9 | 294.3 | 288.4 | 301.5 | 295.4 |
| bending strength (MPa) at 25°C | 166 | 121 | 143 | 139 | 69 |
| bending strength (MPa) at 150°C | 145 | 103 | 111 | 116 | 67 |
| bending strength (MPa) at 25°C, after heat treatment at 250°C for 200 hours | 170 | 125 | 141 | 145 | 78 |

**[Table 2]**

| | Comparative Example 1 | Comparative Example 2 | Comparative Example 3 | Comparative Example 4 | Comparative Example 5 |
|---|---|---|---|---|---|
| viscosity of resin composition (mPa·s) | 87 | 754 | - | 670 | 415 |
| Tg(°C) | inability to mold | inability to mold | - | 181.3, 277.6 | 128.3, 312.4 |
| bending strength (MPa) at 25°C | - | | - | 163 | 147 |
| bending strength (MPa) at 150°C | - | - | - | 75 | 33 |
| bending strength (MPa) at 25°C, after heat treatment at 250°C for 200 hours | - | - | - | 65 | 140 |

As shown in Tables 1 and 2, it was confirmed that all the thermosetting resin compositions of Examples 1 to 5 had a viscosity capable of impregnating the fiber base material with the thermosetting resin compositions at 80°C, and could be molded at 200°C or less. It was confirmed that all the cured products of Examples 1 to 5 had high heat resistance.

On the other hand, it was confirmed that all the thermosetting resin compositions of Comparative Examples 1 to 3 which did not contain, as essential components, all of a maleimide compound (A), a compound (B) having two or more polymerizable unsaturated hydrocarbon groups in its molecule, and a cyanate ester compound (C) could not be molded at 200°C or less.

It was confirmed that the thermosetting resin composition of Comparative Example 4 using the epoxy resin composition in place of the compound (B) having two or more polymerizable unsaturated hydrocarbon groups in its molecule had a largely lowered bending strength under high temperature and after high-temperature exposure.

Furthermore, the thermosetting resin composition of Comparative Example 5, which did not contain the cyanate ester compound (C), contained a maleimide resin modified by an allyl compound as the maleimide compound (A). However, the thermosetting resin composition of Comparative Example 5 had Tg observed at low temperature, even if the thermosetting resin composition was post-cured for 6 hours at 250°C. It was confirmed that the thermosetting resin composition of Comparative Example 5 had insufficient curability and a largely lowered bending strength under high temperature.

As described above, the present invention is not limited to the above-mentioned embodiment and examples, and modifications can be suitably made in the scope not to depart from the scope of the present invention.

### Industrial Applicability

As described above, the present invention can be widely and effectively utilized in various applications such as an aviation material, a machine tool material, and electrical and electronic materials. Particularly, the present invention can be effectively utilized in fields such as the matrix resin of the fiber-reinforced composite material requiring heat resistance and a sealant for electrical and electronic parts. Furthermore, the present invention can be especially and effectively utilized in the general field of the thermosetting resin requiring the elimination of the solvent.

The present application claims priority from Japanese Patent Application (Japanese Patent Application No. 2010-289246) filed to the Japan Patent Office on December 27, 2010, the contents of which are hereby incorporated by reference.

## Claims

1. A thermosetting resin composition comprising, as essential components, a maleimide compound (A), a compound (B) having two or more polymerizable unsaturated hydrocarbon groups in its molecule, and a cyanate ester compound (C).

2. The thermosetting resin composition according to claim 1, wherein content rates of the maleimide compound (A), the compound (B), and the cyanate ester compound (C) to a total amount of the compounds (A), (B), and (C) satisfy the following relationships:
| | |
|---|---|
| the maleimide compound (A) | 30 to 70% by mass; |
| the compound (B) | 5 to 30% by mass; and |
| the cyanate ester compound (C) | 20 to 45% by mass. |

3. The thermosetting resin composition according to claim 1 or 2, wherein the thermosetting resin composition has a viscosity at 80°C of 90 to 700 mPa·s measured using a B-type viscometer.

4. The thermosetting resin composition according to any one of claims 1 to 3, wherein the compound (B) has, in its molecule, two or more polymerizable unsaturated hydrocarbon groups selected from the group consisting of an acrylic group, a methacrylic group, a vinyl group, an allyl group, and an isopropenyl group.

5. The thermosetting resin composition according to any one of claims 1 to 4, wherein the maleimide compound (A) is one or more selected from the group consisting of 4,4'-diphenylmethane bismaleimide, polyphenylmethane maleimide, 1,6-bismaleimide-(2,2,4-trimethyl)hexane, and bisphenol A diphenyl ether bismaleimide.

6. The thermosetting resin composition according to any one of claims 1 to 5, wherein a melting point of the maleimide compound (A) is 205°C or less.

7. The thermosetting resin composition according to any one of claims 1 to 6, wherein the compound (B) is 1,3-diisopropenylbenzene or trimethylolpropane tri(meth)acrylate.

8. The thermosetting resin composition according to any one of claims 1 to 7, wherein the cyanate ester compound (C) has two or more aromatic rings in its molecule, and has a viscosity at 100°C of 100 mPa·s or less.

9. The thermosetting resin composition according to any one of claims 1 to 8, further comprising a polymerization accelerator (D),
wherein a content of the polymerization accelerator (D) is 0.01 to 5 parts by mass based on the total 100 parts by mass of the maleimide compound (A), the compound (B), and the cyanate ester compound (C).

10. The solvent-free thermosetting resin composition according to any one of claims 1 to 9, wherein the thermosetting resin composition is substantially free of a solvent.
